# EUROPÄISCHE PATENTSCHRIFT

(11) **EP 0 853 924 B1**
(45) Veröffentlichungstag und Bekanntmachung des Hinweises auf die Patenterteilung: **28.07.2004**
(21) Anmeldenummer: 97121338.4
(22) Anmeldetag: 04.12.1997
(51) Int. Cl.: A61C 1/18

(54) **Zahnärztliches Handstück mit einer Vorrichtung zur Schmierung von rotierenden Teilen mit flüssigem Schmiermittel**
Dental handpiece with device for lubricating the rotating parts with liquid lubricants
Pièce à main dentaire avec une dispositif pour graisser les parties rotatives par moyens de lubrifiants liquides

(30) Priorität: 17.12.1996 DE 19652535
(43) Veröffentlichungstag der Anmeldung: 22.07.1998
(73) Patentinhaber: Sirona Dental Systems GmbH, 64625 Bensheim (DE)
(72) Erfinder: Eglmeier, Hans, Dipl.-Ing., D-90419 Nürnberg (DE); Franetzki, Manfred, Dr., 64625 Bensheim (DE)
(74) Vertreter: Sommer, Peter

(56) Entgegenhaltungen:
- DE-A- 2 830 176
- FR-A- 1 216 419
- FR-A- 2 456 282

## Beschreibung

Die Erfindung bezieht sich auf ein zahnärztliches Handstück mit einer Vorrichtung zur Schmierung von rotierenden Teilen mit flüssigem Schmiermittel, welches in dosierter Menge aus einem im Handstück angeordneten Reservoir den zu schmierenden Teilen zugeführt wird.

Zahnärztliche Handstücke weisen in der Regel mehrere rotierende Teile auf, die im Betrieb einer Reibung unterworfen sind und deshalb in regelmäßigen Abständen geschmiert werden müssen. Solche zu schmierenden Teile können z.B. Getriebeverzahnungen und/oder Wälzlager sein, mit denen die die Verzahnung tragenden Triebwellen im Handstück gelagert sind. Die Intervalle zur Schmierung können unterschiedlich sein; sie sind einerseits durch die Betriebszeit, andererseits durch das nach jedem Gebrauch erforderliche Reinigen, Desinfizieren und Sterilisieren, bei welchem häufig noch vorhandenes Restschmiermittel ausgewaschen wird, festgelegt. Demzufolge müssen in der Praxis die Handstücke mehrmals täglich geschmiert werden. Häufig wird dies durch Einsprühen eines geeigneten Öls, gegebenenfalls unter Zuhilfenahme einer separaten Sprüheinrichtung, durchgeführt.

Um eine dauerhafte Schmierung mit Langzeitwirkung zu erzielen, wurde schon vorgeschlagen, das Schmiermittel mit Hilfe von Druckluft aus im Handstück angeordneten Vorratskammern dosiert zu den rotierenden Teilen zu leiten (US-3 069 775, AT-217 152). Zur dosierten Abgabe des Schmiermittels von der Kammer sind bei den bekannten Anordnungen u.a. Dochtstreifen vorgesehen, an deren freien Enden die Druckluft vorbeistreichen und damit Schmiermittel aufnehmen kann.

Das vorgenannte Schmierverfahren ist mit verschiedenen Nachteilen behaftet. Nachdem die Druckluft teilweise am Kopfende des Handstückes austritt, ist nicht zu vermeiden, daß auch dort Schmiermittel mit austritt und damit in den Patientenmund gelangen kann. Ein weiterer Nachteil ist darin zu sehen, daß sich an den Wandungen der Leitungswege Schmiermittel festsetzen, verkrusten und damit den Querschnitt zusetzen kann. Die vorgenannte Art der Schmierung mit Druckluft als Träger des Schmiermittels ist in der Regel auch nicht zur Schmierung von Handstücken, die mit einem Elektromotorantrieb versehen sind, geeignet.

Auch das weiterhin bekannte direkte tropfenweise Einleiten von Schmiermittel über eine manuell zu öffnende und wieder zu verschließende Bohrung, die das Reservoir mit der Druckluftleitung verbindet (FR-1 216 419), ist mit den vorgenannten Nachteilen behaftet.

Aus der EP-0 228 609 ist es zur Schmierung von Getriebeverzahnungen bekannt, im Bereich der Zahnräder Öffnungen und/oder Kanäle zur Zufuhr von Schmiermittel aus einem im Handstück angeordneten Reservoir anzuordnen. Damit das Schmiermittel während des Betriebes nicht aus dem Getriebe austreten kann, ist dort ein Luftführungsteil vorgesehen, welches in der Gehäuseinnenhülse des Handstückes unter Belassung eines geringen Ringspaltes um die Welle herum angeordnet ist und der Schmierung einen Strömungswiderstand entgegensetzt.

Die vorgenannten bekannten Lösungen führten bisher nicht zu der gewünschten feindosierten Zuführung des Schmiermittels an die Verbraucher.

Aufgabe der vorliegenden Erfindung ist es, ein zahnärztliches Handstück mit einer Vorrichtung zur Schmierung von rotierenden Teilen mit flüssigem Schmiermittel der eingangs genannten Art zu schaffen, die es ermöglicht, flüssiges Schmiermittel aus dem im Handstück befindlichen Reservoir gezielt in feindosierter Menge zu den Verbrauchern führen zu können, ohne daß die vorgenannten Nachteile in Kauf genommen werden müssen.

Das erfindungsgemäß vorgesehene aktive Fördermittel kann eine Pumpeinrichtung umfassen, die eine Membrankammer mit einer durch Druck beaufschlagbaren Membrane enthält. Die Druckbeaufschlagung der Membrane kann mit Hilfe eines von Hand betätigbaren Druckelements, alternativ mit Hilfe eines fluiden Mediums erfolgen. Bei der zuletzt genannten Variante können die Fördermittel eine Ventilanordnung umfassen, wobei das Reservoir über eine Förderleitung mit der Membrankammer und die Membrankammer über eine Kapillarleitung mit den zu schmierenden Teilen verbunden sind und wobei ferner in den Leitungen Ventile so angeordnet sind, daß das Schmiermittel nur bei einem auf dem Membran abgegebenen Druckimpuls gefördert wird.

Die Fördermittel können auch eine elektrostatische Pumpeinrichtung oder eine Piezo-Pumpeinrichtung umfassen.

Die erfindungsgemäßen Maßnahmen stellen sicher, daß nur kleinste Mengen an Schmiermittel zugeführt werden, so daß das im Reservoir gespeicherte Schmiermittel über einen längeren Zeitraum, gegebenenfalls über die normalen Serviceintervalle, oder sogar über die gesamte Lebensdauer des Handstückes hinaus, zur Verfügung steht.

Die Schmiermittelreservoirs können starre Hohlkörper sein, die mit entsprechenden Ausfluß- und Belüftungsöffnungen versehen sind, wobei die Belüftungsöffnungen so gestaltet sind, daß das Schmiermittel unabhängig von der Lage, die das Instrument einnimmt, nicht auslaufen oder auskriechen kann.

Hierzu sind in vorteilhafter Ausgestaltung entsprechende Sperrflächen vorhanden, die teils scharfe Kanten aufweisen können, so daß ein Wegkriechen des Schmiermittels verhindert bzw. ein Abreißen des Ölfilms durch die an scharfen Kanten stark geänderte Oberflächenspannung erreicht wird. Die Sperrflächen können auch aus einem ölabstoßendem (oleophobem) Material bestehen oder mit einem solchen Material beschichtet (epilamisiert) sein.

Die Hohlkörper können auch aus elastischen Wänden bestehen, z.B. ist es denkbar, hierfür einen Kunststoffsack oder einem Kunststoffbalg, der mit zunehmender Leerung zusammenfällt, vorzusehen. Auch eine Zylinderkolbenanordnung ist, sofern dies die räumliche Konstellation zuläßt, möglich.

Die Schmiermittelreservoirs sind vorteilhafterweise in unmittelbarer Nähe der zu schmierenden Teile angeordnet. Bei einem Turbinenhandstück beispielsweise sind gemäß einer vorteilhaften Ausführung die Reservoirs zur Schmierung der Lager der Rotorwelle im Kopfgehäuse angeordnet, wobei die Anordnung vorteilhafterweise so getroffen ist, daß die Reservoirs topfförmig um die Lager herum angeordnet sind. In einer weiteren vorteilhaften Ausgestaltung der Erfindung bilden die Reservoirs zusammen mit dem gesamten Rotorpaket eine Baueinheit, die im Kopfgehäuse lösbar gehaltert ist.

Mehrere Ausführungsformen der Erfindung werden nachfolgend anhand der Zeichnung näher erläutert.

Es zeigen:
Figur 1 ein Kopfgehäuse eines zahnärztlichen Handstückes teilweise im Längsschnitt,
Figur 2 ein zahnärztliches Hand- und Winkelstück, teilweise im Längsschnitt,
Figur 3 einen Ausschnitt aus Figur 2 in vergrößerter Darstellung,
Figur 4 eine Prinzipdarstellung der Schmiermittelförderung nach Figur 3,
Figur 5 eine Prinzipdarstellung einer Schmiermittelförderung entsprechend Figur 2, rechte Bildseite,
Figur 6 eine Prinzipdarstellung der Schmiermittelzufuhr entsprechend Figur 2, linke Bildseite.

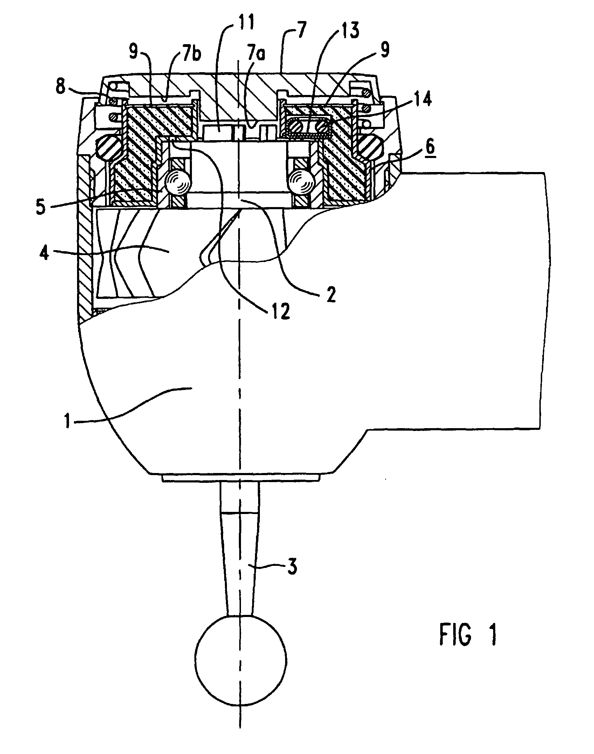

Die Figur 1 zeigt, teilweise im Schnitt, den vorderen Teil eines zahnärztlichen Turbinenhandstückes mit einem Kopfgehäuse 1, in dem in bekannter Weise eine Rotorwelle 2 für ein in Rotation setzbares Werkzeug 3 gelagert ist. Der Rotor des Turbinenantriebes ist mit 4 bezeichnet. Die Rotorwelle 2 ist beidseitig des Rotors 4 in Wälzlagern 5 gelagert. Das gesamte Rotorpaket, bestehend aus den Teilen 2, 4 und 5, kann zusammen mit an beiden Lagern 5 angeordneten und diese topfförmig umgebenden Schmiermittelreservoirs 6 nach Abnehmen eines Druckdeckels 7 axial aus dem Kopfgehäuse entnommen werden. Der Druckdeckel 7 stützt sich in bekannter Weise mittels einer Druckfeder 8 im Kopfgehäuse 1 ab. Die nachfolgende Beschreibung bezieht sich auf die Schmierung der Lager im oberen Teil des Kopfgehäuses. Die Schmierung der Lager im unteren Teil kann entsprechend einer der nachfolgend beschriebenen Varianten erfolgen.

Das obere Schmiermittelreservoir 6 ist an sich ein starres Behält-nis, aus Kunststoff oder Metall. Benachbart dem Druckdeckel 7 ist das Behältnis mit einer ringförmigen elastischen Membrane 9 verschlossen. Der Druckdeckel 7 enthält eine erste Druckfläche 7a, die mit einem Spannsystem 11 zusammenwirkt, mit dem das Werkzeug 3 in bekannter Weise drehfest mit der Rotorwelle verbunden ist. Mit 7b ist eine zweite Druckfläche bezeichnet, die mit der Membrane 9 zusammenwirkt. Die Anordnung ist so getroffen, daß bei einer axialen Betätigung, also bei einem Druck auf den Deckel 7, zunächst das Spannsystem 11 zur Entnahme des Werkzeuges 3 gelöst wird und erst danach die Fläche 7b auf die Membrane 9 drückt. Durch einen kurzzeitigen Druckimpuls auf die Membrane 9 wird eine geringe Menge des im Behältnis befindlichen flüssigen Schmiermittels über eine Düse 12 auf den äußeren Lagerring des Lagers geschleudert. Bei jedem Druck auf den Druckdeckel, also nach jedem Öffnen des Spannsystems, wird somit automatisch eine sehr geringe Menge des Schmiermittels über die Düse dem Lager zugeführt. Für den Druckausgleich im Reservoir 6 sorgt eine an geeigneter Stelle vorgesehene, nicht näher bezeichnete Entlüftungsbohrung. Versieht man die Bohrung 12 mit einer scharfen Abrißkante, so kann die Öffnung gleichsam auch als Belüftungsbohrung dienen.

Als Schmiermittel kann an sich jedes handelsübliche, zur Schmierung von Dentalinstrumenten geeignete, dünnflüssige Schmieröl verwendet werden. Typischerweise hat ein solches Schmieröl eine Viskosität, die im Bereich von etwa 20 bis 40 mm²/s bei 20°C nach DIN 51561 liegt.

Der Hohlraum kann auch mit einem geeigneten Strukturschaum ausgefüllt sein, in dem das flüssige Schmiermittel gebunden ist. Als Strukturschaum kann ein offenporiges Schaumstoffmaterial verwendet werden, welches ein relativ geringes Eigenvolumen aufweist und autoklavierbar ist.

Die Schmiermittelabgabe kann alternativ auch darin bestehen, daß, wie auf der im Bild rechten Seite des Lagers 5 gezeigt, das Reservoir 6 mit einer (oder mehreren) Öffnung(en) versehen ist, die durch eine sehr feinporige (< 0,2µ) Membrane 13 bedeckt sind. Ein darüber angeordneter O-Ring 14 dient zur Halterung der Membrane sowie zur Abdichtung des Reservoirs in diesem Bereich. Die Membrane 13, die beispielsweise aus Polykarbonat bestehen kann, dient außer einer Durchflußbegrenzung für das Schmiermittel auch dazu, das Innere des Reservoirs gegen Eindringen von Druckluft, mit der der Rotor angetrieben wird, abzuschirmen. Wegen der sehr feinen Membranporen wirken vergleichsweise hohe Kapillarkräfte zwischen der Membran und dem gespeicherten Schmiermittel, wodurch eine Durchlässigkeit der Membrane für Luft erst ab einem bestimmten Grenzdruck möglich ist. Dieser liegt aber oberhalb des Betriebsdruckes der Treibluft (typischerweise zwischen 1 und 3 bar). Die vorgesehene Maßnahme verhindert ein Leerblasen des Reservoirs über eine an geeigneter Stelle vorgesehene Entlüftungsbohrung.

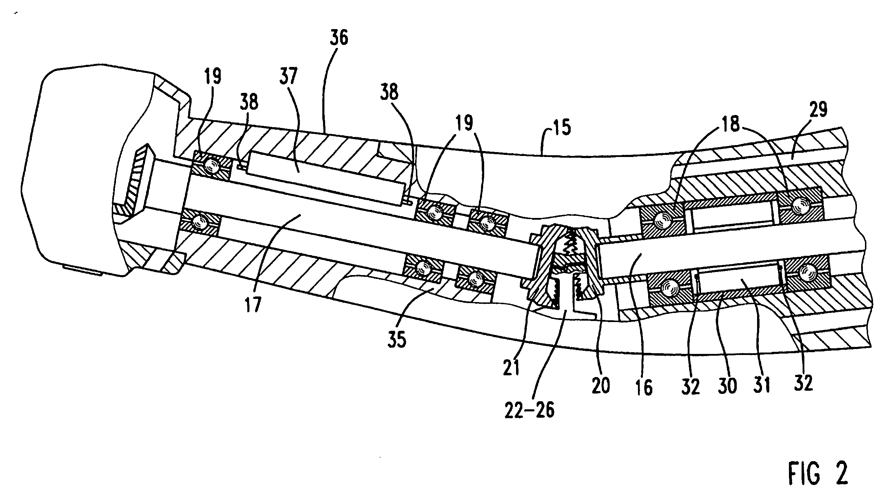

Die Figur 2 zeigt einen Ausschnitt eines zahnärztlichen Handstückes, bei dem im Innern einer Griffhülse 15 zwei Triebwellenabschnitte 16, 17 gelagert sind. Zur Lagerung sind mehrere Wälzlager 18, 19 vorgesehen. Die Verzahnung besteht aus zwei Zahnrädern 20, 21 mit Stirnverzahnung.

Nachfolgend werden drei verschiedene Varianten näher beschrieben, mit denen einerseits die Wälzlager 18 und 19 und andererseits die Getriebeverzahnung der Zahnräder 20, 21 mit flüssigem Schmiermittel geschmiert werden können. Wenn im folgenden drei verschiedene Varianten einer Schmiermittelzufuhr in einem Handstück aufgezeigt werden, so ist es in der Praxis nicht erforderlich, diese drei verschiedenen Lösungen in der dargestellten baulichen Form zu realisieren. Verschiedene Abwandlungen, auch in baulicher Art, liegen deshalb im Rahmen der Erfindung.

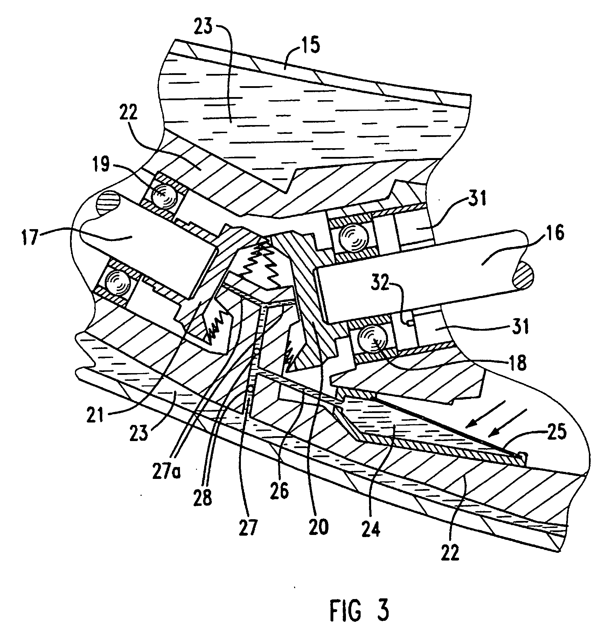

Die Figur 3 zeigt anhand einer Prinzipdarstellung einen Ausschnitt aus der Getriebeverzahnung in vergrößerter Ansicht. Aus der Darstellung ist ersichtlich, daß der Raum zwischen Griffhülse 15 und einer Innenhülse 22, die die Triebwellenanordnung aufnimmt, Hohlräume 23 enthält, die zur Schmiermittelbevorratung genutzt sind. Die Hohlräume 23 sind über Leitungen 26, 27 mit einer Membrankammer 24 verbunden, die eine Membrane 25 enthält, welche mit Druckluft beaufschlagbar ist. Die Druckluftbeaufschlagung kann von einer im Handstück angeordneten Druckluftleitung 29 (Fig. 2) aus erfolgen. Die Fläche der Membrane 25 ist so zu bemessen, daß auch bei geringem Druck eine ausreichende Förderung des Schmiermittels gewährleistet ist. Die zu den beiden Zahnrädern 20, 21 führenden Leitungsabschnitte 27a sind Kapillarleitungen, deren Enden in einem kapillaren Abstand zu den beiden Stirnzahnrädern münden. In der Leitung 27 befinden sich zwei Miniaturrückschlagventile 28, die sicherstellen, daß das Schmiermittel bei Druckbeaufschlagung der Membrane 25 aus der Membrankammer 24 gedrückt und über die beiden Kapillarleitungen 27a den Stirnverzahnungen zugeführt werden, daß aber während der Schmiermittelzufuhr ein Rückfließen in das Reservoir 23 verhindert wird. Bei Druckentlastung dagegen wird über das obere Ventil die Zufuhr von Schmiermittel zu den Kapillarleitungen verhindert, das Schmiermittel aber vom Reservoir 23 in die Membrankammer 24 transportiert. Auf diese Weise kann während des Handstückbetriebes, beispielsweise bei jedem Einschalten des Motors und dem damit gekoppelten Einschalten der Motorkühlluft, den Verzahnungen Schmiermittel zugeführt werden.

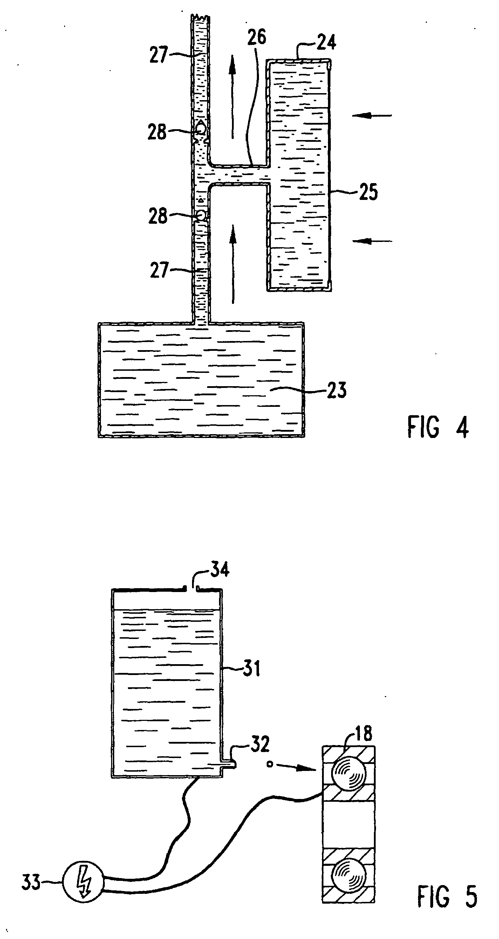

Die Figur 4 zeigt die am Anwendungsbeispiel erläuterte Schmiermittelförderung in einer Prinzipdarstellung.

In weiterer Betrachtung der Figur 2 sei darauf hingewiesen, daß für die beiden Wälzlager 18 auf der rechten Bildseite eine Einrichtung mit elektrostatischer Schmiermittelförderung vorgesehen ist. An der Innenwandung eines Distanzringes 30 ist ein ringförmiges Schmiermittelbehältnis 31 vorgesehen, welches benachbart den umlaufenden Innenringen der Kugellager Austrittsdüsen 32 aufweist. Die Austrittsdüsen sind in einem sehr engen Abstand zu den Stirnflächen der Lagerungen angeordnet. Die Fördereinrichtung bildet hier eine elektrostatische Pumpe, bei der einerseits die metallischen Innenringe der Lager und andererseits das metallische Gehäuse des Reservoirs an einer Spannungsquelle angeschlossen sind. Durch impulsweises Anlegen einer im Hochspannungsbereich liegenden Spannung, typischerweise oberhalb 1.000 V (bis ca. 15.000 V), werden an den Austrittsöffnungen der Düsen kleinste Öltröpfchen abgegeben und auf das Lager geschleudert. Der Abstand zwischen Düse und Lager kann, je nach Ausführung und vorgesehener Spannung, im Bereich zwischen 0,1 und etwa 3 mm liegen.

Anstelle des metallischen oder metallisierten Schmiermittelbehältnisses 31 kann auch ein Kunststoffreservoir vorgesehen werden. In diesem Fall müßten dann die Austrittsdüsen aus Metall oder metallisiertem Kunststoff bestehen und mit entsprechenden Zuleitungen versehen sein. Die an die Wälzlager 18 anlegbare Spannung wird man, um Schleifringe zu vermeiden, zweckmäßigerweise an die feststehenden Außenringe der Wälzlager leiten.

Als Spannungsquelle kann eine Knopfzelle im Bereich von 1 bis 3 V verwendet werden. Diese kann in geeigneter Weise im Handstück selbst oder im Versorgungsschlauch des Handstückes angeordnet werden. Gleiches gilt für den notwendigen Spannungsumsetzer, der die besagte Niederspannung durch eine entsprechende Hochspannungskaskadenschaltung in die genannte Hochspannung umsetzt. Auch dieses Bauteil kann entweder im Handstück oder in der zugehörigen Anschlußarmatur angeordnet sein.

Die Figur 5 zeigt in einer schematisierten Darstellung das Prinzip einer solchen elektrostatischen Pumpe, wobei die Spannungsquelle (nebst Spannungsumsetzer) mit 33 bezeichnet ist. Die im Schmiermittelreservoir 31 vorgesehene Entlüftungsbohrung 34 ist so gestaltet, daß ein ungewolltes Austreten des Schmiermittels verhindert wird. Die Spannungsquelle 33 kann auch als Piezo-Spannungsquelle ausgebildet sein.

Auf der linken Bildseite der Figur 2 ist eine weitere Variante einer Schmiermittelförderung dargestellt. Hier ist in einer radialen Ausnehmung einer Hülse 35 des Halsteils 36 ein Schmiermittelreservoir 37 eingesetzt. Das Reservoir enthält wiederum beidseitig Austrittsdüsen 38, die in engem Abstand zu den Außenringen der Wälzlager angeordnet sind, sowie nicht näher bezeichnete Entlüftungsbohrungen. Die Einrichtung ist hier als Piezo-Pumpeinrichtung ausgeführt.

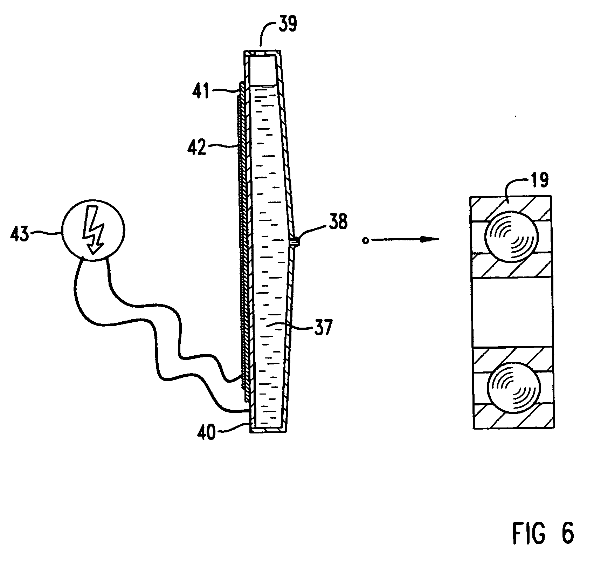

Anhand der Figur 6 wird das Prinzip einer solchen Piezo-Pumpeinrichtung erläutert. Zur einfacheren Erläuterung des Prinzips ist hier eine Anordnung mit nur einer Austrittsdüse 38 und einer Entlüftungsbohrung 39 gewählt.

Die Rückseite des Schmiermittelreservoirs 37 wird begrenzt durch eine Metallmembrane 40, auf der ein beidseitig metallisiertes Piezo-Kristallplättchen 41 aufgebracht ist. Darüber befindet sich eine metallisch leitende Elektrode 42, die mit dem einen Pol einer Spannungsquelle 43 verbunden ist, deren anderer Pol mit der Metallmembrane 40 verbunden ist. Sobald das Piezo-Kristall einen Spannungsimpuls erhält, wird die Metallmembran 40 kurz verformt. Der dabei auf das Schmiermittel ausgeübte Druckstoß führt dazu, daß an der Öffnung der Düse 38 eine geringe Menge Schmiermittel austritt und auf das korrespondierend dazu angeordnete Lager 19 geschleudert wird. Die für das Verformen des Piezo-Kristalls erforderliche Spannung ist wesentlich niedriger als bei der zuvor beschriebenen elektrostatischen Ausführung; sie braucht nur im Bereich einiger 100 V zu liegen.

Auch bei dieser Variante kann die Spannungsquelle im Handstück oder im handstückseitigen Teil der Anschlußarmatur angeordnet sein.

## Patentansprüche

1. Zahnärztliches Handstück mit einer Vorrichtung zur Schmierung von rotierenden Teilen (5, 18-21) mit einem flüssigen Schmiermittel, welches in dosierter Menge aus einem im Handstück angeordneten Reservoir (6, 24, 31) den zu schmierenden Teilen zugeführt wird, **dadurch gekennzeichnet, daß** das Schmiermittel mit Hilfe eines im Handstück vorhandenen aktiven Fördermittels (7, 9, 25, 40-42; 31-33) über eine Kapillarleitung (27) oder eine Düse (12, 32, 38,) mit entsprechend kleiner Düsenöffnung vom Reservoir (6, 24, 31) zu den zu schmierenden Teilen (5, 18-21) transportiert wird.

2. Zahnärztliches Handstück nach Anspruch 1, **dadurch gekennzeichnet, daß** die Fördermittel eine Pumpeinrichtung umfassen, die eine Membrankammer (5, 24) mit einer durch Druck beaufschlagbaren Membrane (9, 25) enthält.

3. Zahnärztliches Handstück nach Anspruch 2, **dadurch gekennzeichnet, daß** die Druckbeaufschlagung der Membrane (9) mit Hilfe eines von Hand betätigbaren Druckdeckels (7) erfolgt.

4. Zahnärztliches Handstück nach Anspruch 3, **dadurch gekennzeichnet, daß** die Membrane (9) mit dem Druckdeckel (7) eines im Kopfgehäuse (1) des Handstückes angeordneten Spannsystems (11) zur Halterung eines in der Rotorwelle(2) zu halternden Werzeuges (3) zusammenwirkt.

5. Zahnärztliches Handstück nach Anspruch 4, **dadurch gekennzeichnet, daß** zur Schmierung der Lager (5) der im Kopfgehäuse (1) des Handstückes gelagerten Rotorwelle (2) zumindest für das eine Lager (5) das Reservoir (6) als das Lager konzentrisch umgebender topfförmiger Ring ausgebildet ist.

6. Zahnärztliches Handstück nach Anspruch 5 , **dadurch gekennzeichnet, daß** das Reservoir (6) zumindest mit dem einen Lager (5), vorzugsweise mit dem gesamten, Rotor (4) und Rotorwelle (2) einschließenden Rotorpaket eine Baueinheit bildet, die im Kopfgehäuse (1) des Handstückes herausnehmbar gehaltert ist.

7. Zahnärztliches Handstück nach einem der Ansprüche 1 bis 6, **dadurch gekennzeichnet, daß** das Reservoir (6) dem Lager (5) zugewandt an der Austrittsöffnung mit einer für das Schmiermittel durchlässigen Membrane (13) versehen ist.

8. Zahnärztliches Handstück nach Anspruch 7, **dadurch gekennzeichnet, daß** die Porenöffnungen der Membrane < 0,2 µm betragen.

9. Zahnärztliches Handstück nach Anspruch 2, **dadurch gekennzeichnet, daß** die Druckbeaufschlagung der Membrane (25) mit Hilfe eines fluiden Mediums erfolgt, die Fördermittel eine Ventilanordnung (28) enthalten und das Reservoir (23) über eine Förderleitung (26) mit der Membrankammer (24) und die Membrankammer (24) über eine Kapillarleitung (27) mit den zu schmierenden Teilen (20, 21) verbunden sind, und wobei ferner in den Leitungen Ventile (28) so angeordnet sind, daß das Schmiermittel nur bei einem auf die Membran abgegebenen Druckimpuls gefördert wird.

10. Zahnärztliches Handstück nach Anspruch 1, **dadurch gekennzeichnet, daß** die Fördermittel eine elektrostatische Pumpeinrichtung (31-33) umfassen, bei der das Reservoir (37) zumindest teilweise aus elektrisch leitfähigem Material besteht und bei der einerseits an das Reservoir und andererseits an die zu schmierenden Bauteile (18) mit Hilfe einer Spannungsquelle (33) elektrische Spannungsimpulse anlegbar sind.

11. Zahnärztliches Handstück nach Anspruch 1, **dadurch gekennzeichnet, daß** die Fördermittel eine Piezopumpeinrichtung (40-43) umfassen, bei der eine verformbare metallische Wandung (41), die zumindest einen Teil des Gehäuses des Schmiermittelreservoirs (37) bildet oder an diesem anliegt, einen Piezokristall (41) enthält, an dem mittels Spannungsquelle (33)elektrische Spannungsimpulse anlegbar sind und bei der die Austrittsöffnung (32) des Schmiermittelreservoirs (31) oder einer vom Schmiermittelreservoir zu den zu schmierenden Teilen (18) führenden Kapillarleitung in engem Abstand zur Schmierstelle angeordnet ist.

12. Zahnärztliches Handstück nach einem der Ansprüche 1 bis 11, **dadurch gekennzeichnet, daß** das Reservoir ein starrer Hohlkörper ist, der mindestens eine Austritts- und Belüftungsöffnung enthält, wobei die Belüftungsöffnung so gestaltet ist, daß ein unkontrollierter Ausfluß des Schmiermittels, unabhängig von der Lage der Öffnung im Raum, verhindert wird.

13. Zahnärztliches Handstück nach Anspruch 12, **dadurch gekennzeichnet, daß** ein in das Reservoir eintauchender und die Belüftungsöffnung enthaltender Kanal mit einer scharfen Kante versehen ist.

14. Zahnärztliches Handstück nach Anspruch 12, **dadurch gekennzeichnet, daß** der Hohlkörper mit einem das Schmiermittel aufnehmenden Schaumstoff versehen ist.

15. Zahnärztliches Handstück nach einem der Ansprüche 1 bis 11, **dadurch gekennzeichnet, daß** als Reservoir ein Hohlkörper mit elastischen Wandungen vorgesehen ist.

16. Zahnärztliches Handstück nach einem der vorangegangenen Ansprüche, **dadurch gekennzeichnet, daß** das Reservoir den unmittelbar an das zu schmierende Teil angrenzenden Freiraum des Handstückes ausfüllt.

17. Zahnärztliches Handstück nach einem der Ansprüche 1 bis 16, **dadurch gekennzeichnet, daß** die Übertragungsflächen und/oder Flächen der zu schmierenden Teile Mittel enthalten, die das Wegkriechen des tels aus dem Wirkbereich zumindest teilweise verhindern bzw. ein Abreißen des Schmiermittelfilms bewirken.

18. Zahnärztliches Handstücks mit einer Vorrichtung nach Anspruch 17, **dadurch gekennzeichnet, daß** die Mittel durch Sperrflächen gebildet werden, die aus einem das Schmiermittel abstoßenden Material bestehen oder mit einem derartigen Material beschichtet sind.

19. Zahnärztliches Handstück nach Anspruch 17, **dadurch gekennzeichnet, daß** die Mittel durch an Flächen der Übergangsstellen und/oder an Begrenzungsflächen der zu schmierenden Teile angeordnete, das Wegkriechen des Schmiermittels verhindernde bzw. das Abreißen des Schmiermittelfilms bewirkende scharfe Kanten gebildet sind.

20. Zahnärztliches Handstück nach Anspruch 1, **dadurch gekennzeichnet, daß** in den zu den zu schmierenden Teilen (5, 18, 19, 20, 21) führenden Kapillarkanälen (27) eine die Zufuhrmenge des Schmiermittels bestimmende Membrane angeordnet ist.

## Claims

1. A dental handpiece having means for the lubrication of rotating parts (5, 18-21) with a liquid lubricant which is fed to the parts to be lubricated at a metered rate from a reservoir (6, 24, 31) housed in said handpiece, **characterized in that** said lubricant is transported to said parts to be lubricated (5, 18-21) from said reservoir (6, 24, 31) through a capillary pipe (27) or a nozzle (12, 32, 38,) having an appropriately small nozzle aperture with the aid of active conveying means (7, 9, 25, 40-42, 31-33) present in the handpiece.

2. A dental handpiece as defined in claim 1, **characterized in that** said conveying means comprise pumping means including a diaphragm chamber (5, 24) having a pressure-sensitive diaphragm (9, 25).

3. A dental handpiece as defined in claim 2, **characterized in that** pressure is applied to said diaphragm (9) with the aid of a manually depressible cover plate (7).

4. A dental handpiece as defined in claim 3, **characterized in that** said diaphragm (9) cooperates with said depressible cover plate (7) of a chuck system (11) for holding a bur (3) to be clamped in the rotor shaft (2), which chuck system (11) is disposed in the head housing (1) of said handpiece.

5. A dental handpiece as defined in claim 4, **characterized in that** for the purpose of lubricating the bearing (5) of said rotor shaft (2) mounted in said head housing (1) of said handpiece said reservoir (6) is, for at least that particular bearing (5), in the form of a pot-type ring concentrically encircling said bearing.

6. A dental handpiece as defined in claim 5, **characterized in that** said reservoir (6) forms an integral unit with at least said bearing (5) but preferably with the entire rotor pack incorporating the rotor (4) and rotor shaft (2), which integral unit is removably mounted in the head housing (1) of said handpiece.

7. A dental handpiece as defined in any one of claims 1 to 6, **characterized in that** said reservoir (6) is provided with a lubricant-permeable membrane (13) at its discharge aperture facing said bearing (5).

8. A dental handpiece as defined in claim 7, **characterized in that** the diameter of the pores of said membrane is < 0.2 µm.

9. A dental handpiece as defined in claim 2, **characterized in that** pressure is applied to said diaphragm (25) with the aid of a fluid medium, that said conveying means include a valve system (28), and that said reservoir (23) is connected via a delivery conduit (26) to said diaphragm chamber (24) and said diaphragm chamber (24) is connected via a capillary duct (27) to the parts to be lubricated (20, 21), and further that in the conduits there are disposed valves (28) such that the lubricant is only transported when a pressure impulse is delivered to said diaphragm.

10. A dental handpiece as defined in claim 1, **characterized in that** said conveying means include electrostatic pumping means (31-33) in which said reservoir (37) consists at least partially of electrically conductive material and in which voltage pulses can be applied on the one hand to said reservoir and on the other hand to said components to be lubricated (18), with the aid of a voltage source (33).

11. A dental handpiece as defined in claim 1, **characterized in that** said conveying means include piezoelectric pumping means (40-43) in which a deformable metallic wall (41), which forms at least a portion of the housing of said lubricant reservoir (37) or bears against the same, contains a piezoelectric crystal (41) to which voltage pulses can be applied by means of a voltage source (33) and in which the discharge aperture (32) of said lubricant reservoir (31) or a capillary pipe leading from said lubricant reservoir to said parts to be lubricated (18) is disposed close to said parts to be lubricated.

12. A dental handpiece as defined in any one of claims 1 to 11, **characterized in that** said reservoir is a rigid hollow body having at least one discharge aperture and at least one vent hole, said vent hole being designed so as to prevent any uncontrolled escape of lubricant, irrespective of the position of said vent hole in space.

13. A dental handpiece as defined in claim 12, **characterized in that** a conduit submerged in said reservoir and including said vent hole is provided with a sharp edge.

14. A dental handpiece as defined in claim 12, **characterized in that** said hollow body is provided with a foamed plastics material capable of absorbing said lubricant.

15. A dental handpiece as defined in any one of claims 1 to 11, **characterized in that** said reservoir consists of a hollow body having resilient walls.

16. A dental handpiece as defined in any one of the previous claims, **characterized in that** said reservoir occupies that free space of said handpiece which is directly adjacent said part to be lubricated.

17. A dental handpiece as defined in any one of claims 1 to 16, **characterized in that** the transfer areas and/or surfaces of said parts to be lubricated include means for preventing, at least partially, the lubricant from creeping away from its site of action, *ie* for causing the film of lubricant to break away from the surface.

18. A dental handpiece having means as defined in claim 17, **characterized in that** said means are formed by barrier surfaces which consist of a lubricant-repellent material or are coated with such a material.

19. A dental handpiece as defined in claim 17, **characterized in that** said means are formed by sharp edges disposed at surfaces of the transition points and/or at boundaries of said parts to be lubricated, which sharp edges are configured to prevent lubricant from creeping away, *ie* to cause the film of lubricant to break away from the surface.

20. A dental handpiece as defined in claim 1, **characterized in that** in said capillary channels (27) leading to said parts to be lubricated (5, 18, 19, 20, 21) a membrane is disposed to control the feed rate of said lubricant.

## Revendications

1. Pièce à main dentaire comprenant un dispositif pour lubrifier les parties rotatives (5, 18-21), comprenant un lubrifiant liquide qui est acheminé en quantité dosée depuis un réservoir (6, 24, 31) disposé dans la pièce à main aux pièces à lubrifier, **caractérisée en ce que** le lubrifiant est transporté à l'aide d'un moyen de transport actif (7, 9, 25, 40-42 ; 31-33) disposé dans la pièce à main par le biais d'une conduite capillaire (27) ou d'une buse (12, 32, 38) avec une ouverture de buse petite en conséquence du réservoir (6, 24, 31) aux pièces à lubrifier (5, 18-21).

2. Pièce à main dentaire selon la revendication 1, **caractérisée en ce que** les moyens de transport comprennent un dispositif de pompe qui contient une chambre à membrane (5, 24) avec une membrane (9, 25) pouvant être sollicitée avec de la pression.

3. Pièce à main dentaire selon la revendication 2, **caractérisée en ce que** la sollicitation en pression de la membrane (9) s'effectue à l'aide d'un couvercle de pression (7) actionnable manuellement.

4. Pièce à main dentaire selon la revendication 3, **caractérisée en ce que** la membrane (9) coopère avec le couvercle de pression (7) d'un système de serrage (11) disposé dans le boîtier de tête (1) de la pièce à main pour fixer un outil (3) à fixer dans l'arbre du rotor (2).

5. Pièce à main dentaire selon la revendication 4, **caractérisée en ce que** pour la lubrification des paliers (5) de l'arbre du rotor (2) monté dans le boîtier de tête (1) de la pièce à main, au moins pour un palier (5), le réservoir (6) est réalisé en tant qu'anneau en forme de pot entourant concentriquement le palier.

6. Pièce à main dentaire selon la revendication 5, **caractérisée en ce que** le réservoir (6) forme au moins avec l'un des paliers (5), de préférence avec tout l'ensemble à rotor incluant le rotor (4) et l'arbre de rotor (2), une unité constructive qui est fixée dans le boîtier de tête (1) de la pièce à main, de manière à pouvoir en être ressortie.

7. Pièce à main dentaire selon l'une quelconque des revendications 1 à 6, **caractérisée en ce que** le réservoir (6) est pourvu, du côté tourné vers le palier (5), au niveau de l'ouverture de sortie, d'une membrane (13) perméable au lubrifiant.

8. Pièce à main dentaire selon la revendication 7, **caractérisée en ce que** les ouvertures des pores de la membrane sont < 0,2 µm.

9. Pièce à main dentaire selon la revendication 2, **caractérisée en ce que** la sollicitation en pression de la membrane (25) a lieu à l'aide d'un milieu fluide, les moyens de transport comprennent un agencement de soupape (28) et le réservoir (23) est connecté par le biais d'une conduite de transport (26) à la chambre à membrane (24) et la chambre à membrane (24) est connectée par le biais d'une conduite capillaire (27) aux pièces à lubrifier (20, 21), et en outre des soupapes (28) sont disposées dans les conduites de telle sorte que le lubrifiant soit seulement transporté dans le cas d'une impulsion de pression appliquée sur la membrane.

10. Pièce à main dentaire selon la revendication 1, **caractérisée en ce que** les moyens de transport comprennent un dispositif de pompe électrostatique (31-33), le réservoir (37) se composant au moins en partie d'un matériau conducteur de l'électricité et des impulsions de tension électrique pouvant être appliquées d'une part au réservoir et d'autre part aux composants à lubrifier (18) à l'aide d'une source de tension (33).

11. Pièce à main dentaire selon la revendication 1, **caractérisée en ce que** les moyens de transport comprennent un dispositif de pompe piézo-électrique (40-43), dans lequel une paroi métallique déformable (41), qui forme au moins une partie du boîtier du réservoir de lubrifiant (37) ou s'applique contre celui-ci, contient un cristal piézo-électrique (41) auquel on peut appliquer des impulsions de tension électrique au moyen de la source de tension (33), et dans lequel l'ouverture de sortie (32) du réservoir de lubrifiant (31) ou d'une conduite capillaire conduisant du réservoir de lubrifiant aux pièces à lubrifier (18) est disposée à faible distance du point de lubrification.

12. Pièce à main dentaire selon l'une quelconque des revendications 1 à 11, **caractérisée en ce que** le réservoir est un corps creux rigide qui contient au moins une ouverture de sortie et de ventilation, l'ouverture de ventilation étant configurée de telle sorte qu'une sortie incontrôlée du lubrifiant, indépendamment de la position de l'ouverture dans l'espace, soit empêchée.

13. Pièce à main dentaire selon la revendication 12, **caractérisée en ce que** l'on prévoit un canal avec une arête vive plongeant dans le réservoir et contenant l'ouverture de ventilation.

14. Pièce à main dentaire selon la revendication 12, **caractérisée en ce que** le corps creux est pourvu d'une mousse recevant le lubrifiant.

15. Pièce à main dentaire selon l'une quelconque des revendications 1 à 11, **caractérisée en ce que** l'on prévoit en tant que réservoir un corps creux avec des parois élastiques.

16. Pièce à main dentaire selon l'une quelconque des revendications précédentes, **caractérisée en ce que** le réservoir remplit l'espace libre de la pièce à main directement adjacent à la pièce à lubrifier.

17. Pièce à main dentaire selon l'une quelconque des revendications 1 à 16, **caractérisée en ce que** les faces de transfert et/ou les faces des pièces à lubrifier contiennent des moyens qui empêchent au moins partiellement la fuite par fluage du lubrifiant hors de la zone d'action ou provoquent une rupture du film de lubrifiant.

18. Pièce à main dentaire comprenant un dispositif selon la revendication 17, **caractérisée en ce que** les moyens sont formés par des faces de blocage qui se composent d'un matériau repoussant le lubrifiant ou qui sont recouvertes d'un tel matériau.

19. Pièce à main dentaire selon la revendication 17, **caractérisée en ce que** les moyens sont formés par des arêtes vives disposées sur les faces des points de transfert et/ou sur les faces limites des pièces à lubrifier, empêchant la fuite par fluage du lubrifiant ou provoquant la rupture du film de lubrifiant.

20. Pièce à main dentaire selon la revendication 1, **caractérisée en ce que** l'on dispose dans les canaux capillaires (27) conduisant aux pièces à lubrifier (5, 18, 19, 20, 21) une membrane déterminant la quantité d'apport de lubrifiant.
